# FASCICULE DE BREVET EUROPEEN

(11) **EP 2 932 110 B1**
(45) Date de publication et mention de la délivrance du brevet: **06.02.2019**
(21) Numéro de dépôt: 13815065.1
(22) Date de dépôt: 06.12.2013
(51) Int. Cl.: F16C 3/02, F16C 33/10, F16C 17/02, F16C 33/04

(54) **ORGANE DE GUIDAGE SOUS FORME D'UNE BAGUE POUR LE MONTAGE AVEC FROTTEMENT ET AVEC CAPACITE D'ARTICULATION ET/OU DE COULISSEMENT D'UN ELEMENT.**
FÜHRUNGSKÖRPER IN FORM EINES RINGES ZUR REIBUNGSMONTAGE MIT EINER GELENKS- UND/ODER ELEMENTGLEITKAPAZITÄT
GUIDING BODY IN THE FORM OF A RING FOR FRICTION MOUNTING, WITH AN ARTICULATING AND/OR ELEMENT-SLIDING CAPACITY

(30) Priorité: 13.12.2012 FR 1261988
(43) Date de publication de la demande: 21.10.2015
(73) Titulaire: H.E.F., 42160 Andrezieux-Boutheon (FR)
(72) Inventeur: VILLEMAGNE, Patrick, F-42100 Saint-Etienne (FR); GODARD, Georges, F-42260 Saint-Germain-Laval (FR)
(74) Mandataire: Cabinet Laurent & Charras
(86) Numéro de dépôt international: PCT/FR2013/052966
(87) Numéro de publication internationale: WO 2014/091124

(56) Documents cités:
- DE-U1- 8 406 459
- FR-A- 738 343
- FR-A- 1 019 801
- FR-A1- 2 376 330
- US-A1- 2004 042 698

## Description

L'invention concerne le domaine technique des articulations de type bague, rotule, glissière présentant des agencements aptes à faire office de réserve de graisse afin d'espacer les intervalles de graissage.

L'invention concerne plus particulièrement tous les types de pivots et de glissières nécessitant un graissage périodique pour améliorer le frottement et le glissement entre deux pièces qui ont un mouvement relatif entre elles.

C'est par exemple le cas d'un organe de guidage sous forme d'une bague pour le montage avec capacité d'articulation et/ou de coulissement d'un élément tel qu'un arbre ou axe.

Les agencements aptes à faire office de réserve de graisse au niveau de l'alésage de la bague peuvent être constitués par des trous, des alvéoles des rainures ...

A noter également, toujours de manière connue, que la bague ou l'axe, peuvent présenter des agencements pour alimenter en graisse, selon des périodes déterminées, la zone de frottement et plus particulièrement les agencements aptes à faire office de réserve de graisse.

Un tel organe de guidage est connu du document FR 738 343 A. En effet, il a été constaté que lors d'un graissage standard, on a un renouvellement de la graisse dans le jeu de fonctionnement, mais ce renouvellement dans les agencements sous la charge n'est que partiel et non maitrisé dans le cas de grandes oscillations et inexistant dans le cas de faibles oscillations.

Selon l'état de la technique pour tenter de remédier à cet inconvénient il est nécessaire de réaliser une opération de maintenance très lourde qui nécessite le démontage des pièces afin d'effectuer un graissage manuel puis un remontage desdites pièces.

Cette opération de démontage des pièces antagonistes est longue, coûteuse en nécessitant un temps d'intervention ainsi qu'un risque de dégradation des différents éléments constitutifs de l'articulation considérée.

Il en résulte que cette opération de graissage est très souvent repoussée au détriment d'un bon fonctionnement de l'ensemble.

L'invention s'est fixée pour but de remédier à ces inconvénients de manière simple, sûre, efficace et rationnelle.

Le problème que se propose de résoudre l'invention est de pouvoir assurer une réalimentation en graisse des agencements aptes à faire office de réserve de graisse et situés sous la charge, le problème n'étant pas posé pour les agencements situés en dehors de la charge qui eux, peuvent être réalimentés en graisse.

L'invention est décrite dans la revendication 1.

Il résulte de ces caractéristiques la possibilité de réalimenter les agencements faisant office de réserve de graisse sans démontage des composants de l'ensemble de l'articulation considérée.

Selon l'invention, les moyens sont constitués par des canaux reliant chacun des agencements aptes à faire office de réserve de graisse.

Selon l'invention, les canaux sont disposés en hélice.

Selon une forme de réalisation, les agencements aptes à faire office de réserve de graisse sont constitués par des trous ou cavités ou bien par des rainures.

Selon une forme de réalisation, les agencements d'alimentation en graisse sont constitués par une gorge périphérique externe formée sur une partie de l'élément et débouchant dans l'alésage de la bague, ladite gorge étant en communication avec un système d'injection de la graisse.

L'invention est exposée ci-après plus en détail à l'aide des dessins annexés dans lesquels :
- La figure 1 est une vue en coupe longitudinale d'un organe de guidage sous forme d'une bague pour le montage avec frottement, d'un élément sous forme d'un axe, la bague présentant des agencements aptes à faire office de réserve de graisse tandis que l'axe présente des agencements pour l'injection de la graisse au niveau de la zone de frottement y compris dans les agencements aptes à faire office de réserve de graisse ;
- La figure 2 est une vue de côté correspondant à la figure 1 ;
- Les figures 3 et 4 sont des photographies illustrant le graissage effectué par une injection par le centre de l'axe selon l'état de la technique ;
- La figure 5 est une vue en perspective de la bague selon les caractéristiques de l'invention ;
- La figure 6 est une vue en coupe longitudinale de la bague selon la figure 5 ;
- Les figures 7 et 8 sont des photographies semblables aux figures 3 et 4 selon les caractéristiques de l'invention.

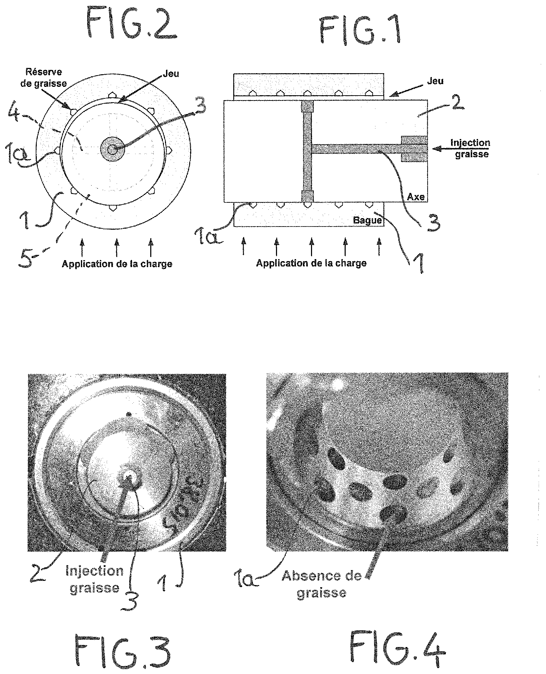

On a illustré figures 1 et 2 un organe de guidage sous forme d'une bague (1) pour le montage avec frottement et avec capacité d'articulation et de coulissement d'un élément (2) sous forme d'un axe par exemple.

La bague (1), notamment son alésage, présente des agencements (la) sous forme de trous, de cavités ou de rainures, par exemple, aptes à faire office de réserve de graisse.

L'axe (2) (ou la bague (1)) présente des agencements pour alimenter en graisse la zone de frottement y compris les agencements (la) selon des périodes déterminées.

Dans l'exemple illustré aux figures 1 et 2, les agencements pour l'injection de la graisse sont constitués par un canal coaxial (3) pour l'injection de la graisse à partir de l'extérieur en communication avec des canaux radiaux (4) débouchant dans une gorge (5) en communication avec l'alésage de la bague (1). De telles dispositions sont données à titre d'exemples parfaitement connus pour un homme du métier.

Comme indiqué, les canaux radiaux (4) sont en communication avec la gorge périphérique externe (5) que présente l'axe (2) et qui débouche dans l'alésage de la bague (1).

On rappelle, comme indiqué dans l'analyse de l'état de la technique, que lors d'un graissage effectué par le centre de l'axe, une certaine quantité de la graisse injectée sort par le jeu existant entre l'axe (2) et la bague (1). Par contre, en partie inférieure qui correspond à l'application de la charge (*symbolisée par les flèches aux* *figures 1 et 2*), la graisse ne déborde pas.

De même on peut observer, après démontage de l'axe (figure 4), qu'après cette opération de graissage, il n'y a pas de graisse dans la zone située sous la charge comme indiquée et notamment agencement faisant office de réserve de graisse.

Selon une caractéristique à la base de l'invention, pour remédier à cet inconvénient, l'alésage de la bague (1) présente des moyens (1b) aptes à mettre en communication les agencements de graissage (4-5) et les agencements (1a) aptes à faire office de réserve de graisse, avec pour effet d'alimenter tous lesdits agencements de réserve de graisse y compris ceux situés sous la charge.

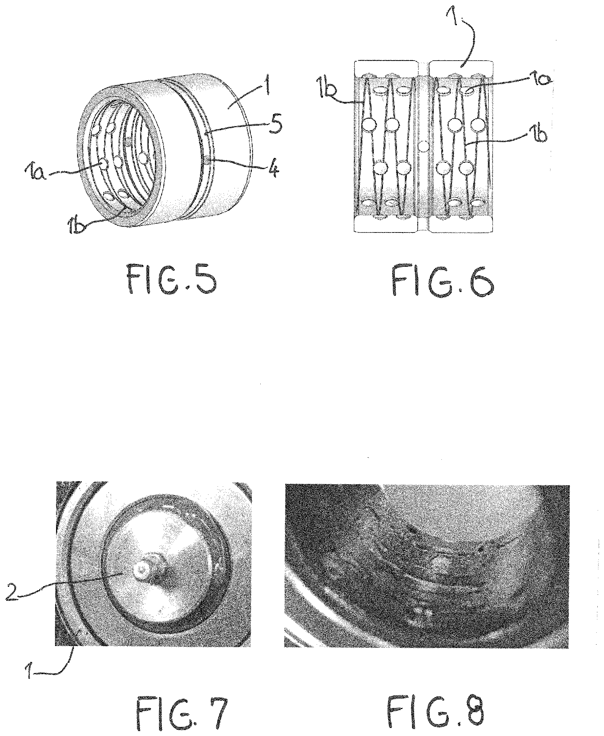

Comme le montrent les figures 5 et 6, les moyens (1b) sont constitués par des canaux reliant chacun des agencements (1a) aptes à faire office de réserve de graisse.

Les canaux (1b) sont avantageusement disposés en hélice afin d'alimenter tous les agencements de réserve de graisse y compris ceux situés sous la charge.

Compte tenu de ces caractéristiques, il existe une continuité entre la gorge de graissage (5) et les agencements (1a) aptes à faire office de réserve de graisse par l'intermédiaire des canaux d'irrigation (1b). On renvoie aux photos des figures 7 et 8 qui montrent que la graisse déborde y compris sous la charge (figure 7) et dans les agencements (1a) qui font office de réserve de graisse, situés sous ladite charge (figure 8).

Les avantages ressortent bien de la description, en particulier on rappelle la possibilité de réalimenter les agencements faisant office de réserve de graisse sans être obligé de démonter les différents composants de l'ensemble d'articulation.

## Revendications

1. Organe de guidage sous forme d'une bague (1) et d'un élément (2) pour le montage avec frottement et avec capacité d'articulation et/ou de coulissement de l' élément (2) dans la bague (1), ladite bague (1) ou ledit élément (2) présentant des agencements (3-4-5) pour alimenter en graisse la zone de frottement selon des périodes déterminées, l'alésage de la bague (1) présentant des agencements (1a) aptes à faire office de réserve de graisse **caractérisé en ce que** l'alésage de la bague présente des canaux (1b) reliant chacun des agencements (1a) aptes à faire office de réserve de graisse pour mettre en communication les agencements (3-4-5) d'alimentation en graisse avec la totalité des agencements (1a) faisant office de réserve de graisse, lesdits canaux (1b) étant disposés en hélice.

2. Organe de guidage selon la revendication 1, **caractérisé en ce que** les agencements (1a) aptes à faire office de réserve de graisse, sont constitués par des trous ou cavités.

3. Organe de guidage selon la revendication 1, **caractérisé en ce que** les agencements (1a) aptes à faire office de réserve de graisse, sont constitués par des rainures.

4. Organe de guidage selon l'une quelconque des revendications 1 à 3 **caractérisé en ce que** les agencements d'alimentation en graisse sont constitués par une gorge périphérique externe (5) formée sur une partie de l'élément (2) et débouchant dans l'alésage de la bague (1), ladite gorge étant en communication avec un système d'injection de la graisse (3-4).

## Patentansprüche

1. Führungsvorrichtung in Form eines Rings (1) und eines Elements (2) zum reibschlüssigen Einpassen des Elements (2) in den Ring (1) mit Gelenk- und/oder Gleitfähigkeit, wobei der Ring (1) oder das Element (2) Anordnungen (3-4-5) aufweist, um dem Reibungsbereich in bestimmten Zeitabständen Schmierfett zuzuführen, wobei die Bohrung des Rings (1) Anordnungen (1a) aufweist, die geeignet sind, als Schmierfettvorrat zu fungieren, **dadurch gekennzeichnet, dass** die Bohrung des Rings Kanäle (1b) aufweist, welche die Anordnungen (1a), die geeignet sind, als Schmierfettvorrat zu fungieren, jeweils verbinden, um die Schmierfett-Zuführungsanordnungen (3-4-5) mit sämtlichen Anordnungen (1a), die als Schmierfettvorrat fungieren, in Verbindung zu bringen, wobei die Kanäle (1b) in einer Spirale angeordnet sind.

2. Führungsvorrichtung gemäß Anspruch 1, **dadurch gekennzeichnet, dass** die Anordnungen (1a), die geeignet sind, als Schmierfettvorrat zu fungieren, aus Löchern oder Hohlräumen gebildet sind.

3. Führungsvorrichtung gemäß Anspruch 1, **dadurch gekennzeichnet, dass** die Anordnungen (1), die geeignet sind, als Schmierfettvorrat zu fungieren, aus Nuten gebildet sind.

4. Führungsvorrichtung gemäß einem der Ansprüche 1 bis 3, **dadurch gekennzeichnet, dass** die Schmierfett-Zuführungsanordnungen aus einer äußeren Umfangsnut (5) gebildet sind, die an einem Teil des Elements (2) ausgebildet ist und in die Bohrung des Rings (1) mündet, wobei die Nut mit einem Schmierfett-Einspritzsystem (3-4) in Verbindung steht.

## Claims

1. Guidance device in the form of a ring (1) and an element (2) for the mounting with friction and with articulation and/or sliding capacity of the element (2) into the ring (1), said ring (1) or said element (2) having workings (3-4-5) to supply grease to the friction area at given time intervals, the bore of the ring (1) having workings (1a) suitable to act as a grease reserve, **characterized in that** the bore of the ring has channels (1b) connecting each of the workings (la) suitable to act as a grease reserve, to put the grease supply workings (3-4-5) in communication with all the workings (1a) acting as a grease reserve, said channels (1b) being disposed in a helix.

2. Guidance device according to claim 1, **characterized in that** the workings (la) suitable to act as a grease reserve are constituted of holes or cavities

3. Guidance device according to claim 1, **characterized in that** the workings (1) suitable to act as a grease reserve are constituted of grooves.

4. Guidance device according to any of claims 1 to 3, **characterized in that** the grease supply workings are constituted of an external peripheral groove (5) formed on one part of the element (2) and opening into the bore of the ring (1), said groove being in communication with a grease injection system (3-4).
